# EUROPÄISCHE PATENTSCHRIFT

(11) **EP 1 992 512 B1**
(45) Veröffentlichungstag und Bekanntmachung des Hinweises auf die Patenterteilung: **11.05.2011**
(21) Anmeldenummer: 08001997.9
(22) Anmeldetag: 02.02.2008
(51) Int. Cl.: B60J 7/12

(54) **Ablegbare Dachanordnung für ein Cabriolet**
Collapsible roof system for a convertible
Agencement de capote pour un cabriolet

(30) Priorität: 12.05.2007 DE 102007022354
(43) Veröffentlichungstag der Anmeldung: 19.11.2008
(73) Patentinhaber: Dr. Ing. h.c. F. Porsche AG, 70435 Stuttgart (DE)
(72) Erfinder: Beierl, Dominik, 70825 Korntal-Münchingen (DE)

(56) Entgegenhaltungen:
- DE-C1- 10 006 296
- JP-A- 2 306 822

## Beschreibung

Bei der Erfindung wird ausgegangen von einer ablegbaren Dachanordnung für ein Cabriolet, gemäß Oberbegriff des Patentanspruchs 1.

Eine gattungsbildende ablegbare Dachanordnung ist aus der DE 100 06 296 C1 bekannt. Sie umfasst ein einen vorderen und hinteren Lenker aufweisendes Hauptgelenk, das für das Schließen und Ablegen der Dachanordnung um ein karosseriefestes Hauptlager bewegbar ist. An dem Hauptgelenk ist mit Abstand zu dem Hauptlager ein Hauptdachelement in ersten Gelenken abgestützt. Befindet sich die Dachanordnung in ihrer Schließstellung, in der sie einen Fahrzeugraum überspannt, befindet sich hinter dem Hauptdachelement ein Zusatzdachelement, welches über ein Verbindungsgestänge mit dem Hauptdachelement in zweiten Gelenken verbunden ist. Dabei ist das Verbindungsgestänge als Viergelenk ausgeführt, welches zur Bewegungssteuerung des Zusatzdachelementes weiterhin mit dem vorderen Lenker des Hauptgelenks über einen Koppellenker verbunden ist.

Aufgabe der Erfindung ist es, eine ablegbare Dachanordnung anzugeben, bei dem das Zusatzdachelement auf einfache Art und Weise bewegt werden kann.

Gelöst wird diese Aufgabe mit einer ablegbaren Dachanordnung, die die in Anspruch 1 genannten Merkmale umfasst. Weitere Ausgestaltungen der Erfindung sind in den Unteransprüchen angegeben.

Die mit der Erfindung hauptsächlich erzielten Vorteile sind darin zu sehen, dass durch die Einbindung des Zusatzdachelements in das Hauptgelenk zur Realisierung des erfindungsgemäßen fünfgliedrigen Koppelgetriebes eine geringe Anzahl von zusätzlichen Getriebegliedern notwendig ist, da die meisten Getriebeglieder von bereits vorhandenen Elementen der ablegbaren Dachanordnung gebildet sind. Damit kann die Dachanordnung auch einfach und kostengünstig aufgebaut werden. Zusätzlich ergibt sich eine sichere Funktionsweise der Dachanordnung, da weniger Getriebeglieder notwendig sind. Ferner kann von einer geringen Ablagehöhe der auch als Softtop bezeichneten Dachanordnung ausgegangen werden.

Besonders bevorzugt wird ein Ausführungsbeispiel gemäß Anspruch 2, bei dem das Hauptgelenk durch ein einfaches Viergelenkgetriebe gebildet wird, also einen vorderen und einen hinteren Lenker umfasst, die um das karosseriefeste Hauptlager bewegt werden. Zwischen dem vorderen Lenker und dem Zusatzdachelement ist erfindungsgemäß ein Getriebeglied des Koppelgetriebes angeordnet, so dass das erfindungsgemäße fünfgliedrige Koppelgetriebe von dem Hauptlager (feststehend mit der Karosserie verbunden) den beiden Lenkern des Hauptgelenks, dem Getriebeglied und dem Zusatzdachelement selbst gebildet ist. Das Zusatzdachelement ist somit in bevorzugter Ausführungsform mit dem hinteren Lenker direkt in einem Gelenk verbunden.

Nach einer in Anspruch 3 angegebenen Weiterbildung der Erfindung ist vorteilhaft, dass das Zusatzdachelement in Schließstellung der Dachanordnung von dem Hauptdachelement abgestützt werden kann.

Besonders bevorzugt wird die Erfindung verwendet in einer Dachanordnung, die neben dem Hauptdachelement und dem Zusatzdachelement noch ein dem Hauptdachelement vorgeordnetes Vorderdachelement aufweist, wie dies in Anspruch 4 angegeben ist. Dabei bildet das Vorderdachelement eine so genannte Dachspitze und das Hauptdachelement und das Zusatzdachelement bilden Formgebungsabschnitte für einen vorzugsweise für die Dachanordnung vorgesehenen Verdeckbezug, so dass das eingangs erwähnte Softtop gebildet werden kann.

Für einen vereinfachten Steuerungsaufwand kann gemäß Anspruch 5 vorgesehen sein, dass das Vorderdachelement steuerungsmäßig in das Hauptgelenk eingebunden ist.

Gemäß einem in Anspruch 6 angegebenen Ausführungsbeispiel ist vorteilhaft, dass eine durchgehende Dachfläche bereitgestellt wird, die bis zu einer vorzugsweise vorgesehenen Heckscheibe reichen kann, die in den nach Anspruch 7 vorgesehenen Verdeckstoff eingebunden ist.

Nach einem Ausführungsbeispiel gemäß Anspruch 8 ist vorgesehen, dass die Heckscheibe zumindest in Schließstellung der Dachanordnung in den Verdeckstoff eingebunden ist. Vorzugsweise erfolgt eine feste Einbindung der Heckscheibe in den Verdeckstoff.

Die Erfindung wird nachfolgend anhand eines Ausführungsbeispiels mit Bezug auf die Zeichnung näher erläutert. Es zeigen:
- Fig. 1: schematisch in einer Seitenansicht eine ablegbare Dachanordnung für ein Cabriolet in Schließstellung und
- Fig. 2: die ablegbare Dachanordnung nach Fig. 1 in einer Teilöffnungsstellung.

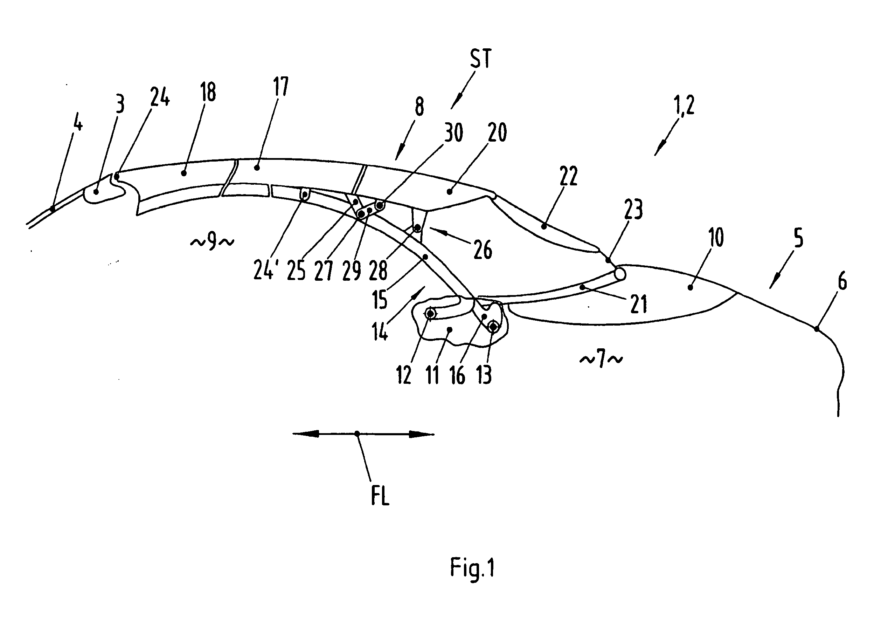

In Fig. 1 ist ausschnittweise und in einem Längsschnitt ein offenes Kraftfahrzeug 1, das auch als Cabriolet bezeichnet wird, dargestellt. Von seiner Karosserie 2 ist ein oberer Abschnitt 3 eines Windschutzscheibenrahmens gezeigt, der eine Windschutzscheibe 4 einfasst. Von der Karosserie 2 ist ferner ein Heckabschnitt 5 zu sehen, der ein das heckseitige Ende bildende Heckteil 6 umfasst. In dem Heckabschnitt 5 ist ein Aufnahmekasten 7 ausgebildet, in den hinein eine Dachanordnung 8 aus ihrer in Fig. 1 gezeigten Schließstellung ST ablegbar ist, um einen unter der Dachanordnung 8 liegenden Fahrgastraum 9 in einer Offenstellung (nicht gezeigt) der Dachanordnung 8 nach oben hin freigeben zu können. In der Schließstellung ST erstreckt sich die Dachanordnung 8 von dem vorderen Abschnitt 3 bis zu dem Heckabschnitt 5, dem hier noch ein so genannter Verdeckkastendeckel 10 zugeordnet ist, der den Aufnahmekasten 7 verschließen oder freigeben kann, um die Dachanordnung 8 in dem Ablagekasten 7 ablegen zu können. An der Karosserie 2 ist ferner noch ein so genanntes Hauptlager 11 feststehend angeordnet, welches auch als Verdecklager für die Dachanordnung bezeichnet werden könnte.

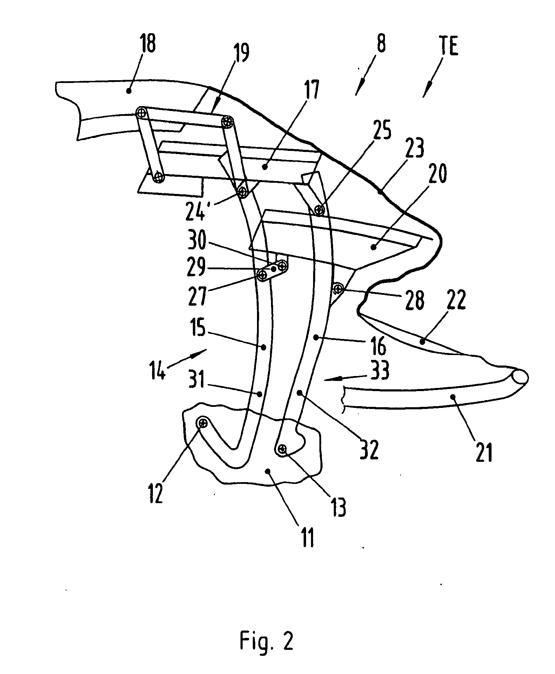

Anhand der Fig. 1 und 2 wird die ablegbare Dachanordnung 8 im Folgenden näher erläutert. An dem Hauptlager 11 ist in Schwenklagern 12 und 13 ein Hauptgelenk 14 befestigt, das in Fahrzeuglängsrichtung FL gesehen zumindest einen vorderen Lenker 15 sowie einen hinteren Lenker 16 aufweist und auf das zum Bewegen der Dachanordnung 8 ein hier nicht gezeigter Antrieb wirkt. Die beiden Lenker 15 und 16 sind vorzugsweise gebogen ausgeführt und tragen etwa im Bereich ihres freien Endes ein Hauptdachelement 17. Dem Hauptdachelement 17 vorgelagert, d.h. in Schließstellung ST vor dem Hauptdachelement 17 angeordnet, ist ein Vorderdachelement 18, welches über ein Koppelgestänge 19 in die Bewegung des Hauptdachelements 17 steuerungsmäßig eingebunden ist. Die Dachanordnung 8 weist ferner ein Zusatzdachelement 20 auf, welches in der Schließstellung ST hinter dem Hauptdachelement 17 angeordnet ist. Zwischen dem Zusatzdachelement 20 und einem das heckseitige Ende bildenden Stoffspannbügel 21 der Dachanordnung 8 ist noch eine Heckscheibe 22 vorgesehen, die vorzugsweise fest in einen Verdeckstoff 23 eingebunden ist. Der Verdeckstoff 23 erstreckt sich vorzugsweise von der vorderen Dachspitze 24 am Dachelement 18 bis zu dem heckseitigen Spannbügel 21, wie dies insbesondere in Fig. 2 zu sehen ist, die die Dachanordnung 8 in einer Teilöffnungsstellung TE zeigt.

Im Bereich der freien Enden der Lenker 15 und 16 ist das Hauptdachelement 17 in ersten Gelenken 24' und 25, die vorzugsweise ein Gelenkpaar bilden, mit dem Hauptgelenk 14 verbunden. Somit bilden die Lenker 15 und 16 und das Hauptdachelement 17 ein einfaches Viergelenk mit den Gelenken 12, 13, 24' und 25.

Über ein Verbindungsgestänge 26 ist das Zusatzdachelement 20 mit dem Hauptgelenk 14 verbunden, wofür zweite Gelenke 27 und 28 vorgesehen sind, die ein Gelenkpaar bilden können und die an den Lenkern 15 und 16 zwischen den ersten Gelenken 24' und 25 und den unteren Gelenke bildenden Schwenklagern 12 und 13 angeordnet sind. Das Verbindungsgestänge 26 weist zumindest einen Koppellenker 29 auf, der mit seinem einen Ende in dem zweiten Gelenk 27 und mit seinem anderen Ende in einem weiteren bzw. dritten Gelenk 30 mit dem Zusatzdachelement 20 verbunden ist. Somit bilden untere Abschnitte 31 und 32 der beiden Lenker 15 und 16, der Koppellenker 29 und das Zusatzdachelement 20 Getriebeglieder eines fünfgliedrigen Koppelgetriebes 33 für das Zusatzdachelement 20, wenn als feststehendes Gestell das Hauptlager 11 als fünftes Getriebeglied hinzugerechnet wird. Das Zusatzdachelement 20 ist an seinem hinteren Ende direkt über das Gelenk 28 mit dem Lenker 16 verbunden, wofür an beiden Teilen ein Fortsatz vorgesehen sein kann, die dann in dem Gelenk 28 miteinander verbunden sind. An seinem vorderen Ende ist das Zusatzdachelement 20 mit dem Koppellenker 29 verbunden.

In Fig. 1 ist noch zu sehen, dass das Vorderdachelement 18, das Hauptdachelement 17 und das Zusatzdachelement 20 durchgehende bzw. in Reihe angeordnete Formgebungsabschnitte für den Verdeckbezug 23 bilden, die also dem Verdeckbezug 23 in Schließstellung ST eine äußere Form bzw. Dachkontur aufprägen. Die Dachelemente 17 und 20 bilden mithin Flächenspriegel, die in Fahrzeuglängsrichtung FL eine entsprechende Länge aufweisen. Die drei Dachelemente 17, 18 und 20 grenzen in Reihe liegend aneinander an bzw. bilden in der Schließstellung ST eine Reihe, so dass sich zumindest das Zusatzdachelement 20 in der Schließstellung ST an dem Hauptdachelement 17 abstützen kann, wodurch sich eine definierte Lage für das Zusatzdachelement 20 ergibt.

## Patentansprüche

1. Ablegbare Dachanordnung (8) für ein Cabriolet, mit einem zumindest zwei Lenker (15, 16) umfassenden und um ein Hauptlager (11) bewegbaren Hauptgelenk (14), einem Hauptdachelement (17), das in ersten Gelenken (24', 25) mit dem Hauptgelenk (14) verbunden ist, zumindest einem - in einer Schließstellung (ST) der Dachanordnung (8) - hinter dem Hauptdachelement (17) angeordneten Zusatzdachelement (20) und mit einem Verbindungsgestänge (26) für das Zusatzdachelement (20), das in zweiten Gelenken (27, 28) mit dem Hauptgelenk (14) verbunden ist, **dadurch gekennzeichnet, dass** das Verbindungsgestänge (26) und das Zusatzdachelement (20) zusammen mit dem Hauptgelenk (14) ein zumindest fünfgliedriges Koppelgetriebe (33) bilden, bei dem die zweiten Gelenke (27, 28) des Zusatzdachelements (20) zwischen dem Hauptlager (11) und den ersten Gelenken (24', 25) liegen.

2. Dachanordnung nach Anspruch 1, **dadurch gekennzeichnet, dass** das Hauptgelenk (14) einen vorderen und einen hinteren Lenker (15, 16) umfasst, dass zwischen dem vorderen Lenker (15) und dem Zusatzdachelement (20) ein Getriebeglied (Koppellenker 29) des Koppelgetriebes (33) angeordnet ist und dass das Zusatzdachelement (20) mit dem hinteren Lenker (16) direkt in einem Gelenk (28) verbunden ist.

3. Dachanordnung nach Anspruch 1 oder 2, **dadurch gekennzeichnet, dass** in Schließstellung (ST) der Dachanordnung (8) das Hauptdachelement (17) und das Zusatzdachelement (20) aneinander liegen.

4. Dachanordnung nach einem der vorhergehenden Ansprüche, **gekennzeichnet durch** ein - in Schließstellung (ST) der Dachanordnung (8) - dem Hauptdachelement (17) vorgeordnetes Vorderdachelement (18).

5. Dachanordnung nach Anspruch 5, **dadurch gekennzeichnet, dass** das Vorderdachelement (18) in das Hauptgelenk (14) steuerungsmäßig eingebunden ist.

6. Dachanordnung nach einem der Ansprüche 4 oder 5, **dadurch gekennzeichnet, dass** in Schließstellung (ST) der Dachanordnung (8) das Vorderdachelement (18), das Hauptdachelement (17) und das Zusatzdachelement (20) in Reihe zueinander liegen.

7. Dachanordnung nach einem der vorhergehenden Ansprüche, **gekennzeichnet durch** einen Verdeckstoff (23), der von den Dachelementen (17, 18, 20) gestützt wird.

8. Dachanordnung nach einem der vorhergehenden Ansprüche, **gekennzeichnet durch** eine Heckscheibe (22), die in den Verdeckstoff (23) zumindest in Schließstellung (ST) der Dachanordnung (8) eingebunden ist.

## Claims

1. Collapsible roof arrangement (8) for a cabriolet, having a main joint (14) which comprises at least two links (15, 16) and can be moved about a main bearing (11), a main roof element (17) which is connected to the main joint (14) in first joints (24', 25), at least one additional roof element (20) which is arranged behind the main roof element (17) in a closed position (ST) of the roof arrangement (8), and having a connecting linkage (26) for the additional roof element (20) which is connected to the main joint (14) in second joints (27, 28), **characterized in that** the connecting linkage (26) and the additional roof element (20) form, together with the main joint (14), an at least five-element coupler mechanism (33), in which the second joints (27, 28) of the additional roof element (20) lie between the main bearing (11) and the first joints (24', 25).

2. Roof arrangement according to Claim 1, **characterized in that** the main joint (14) comprises a front and a rear link (15, 16), **in that** a mechanism element (coupler link 29) of the coupler mechanism (33) is arranged between the front link (15) and the additional roof element (20), and **in that** the additional roof element (20) is connected to the rear link (16) directly in a joint (28).

3. Roof arrangement according to Claim 1 or 2, **characterized in that**, in the closed position (ST) of the roof arrangement (8), the main roof element (17) and the additional roof element (20) bear against one another.

4. Roof arrangement according to one of the preceding claims, **characterized by** a front roof element (18) which is arranged in front of the main roof element (17) in the closed position (ST) of the roof arrangement (8).

5. Roof arrangement according to Claim 5, **characterized in that** the front roof element (18) is incorporated in control terms into the main joint (14).

6. Roof arrangement according to either of Claims 4 and 5, **characterized in that**, in the closed position (ST) of the roof arrangement (8), the front roof element (18), the main roof element (17) and the additional roof element (20) lie in a row with respect to one another.

7. Roof arrangement according to one of the preceding claims, **characterized by** a hood material (23) which is supported by the roof elements (17, 18, 20).

8. Roof arrangement according to one of the preceding claims, **characterized by** a rear window (22) which is incorporated into the hood material (23), at least in the closed position (ST) of the roof arrangement (8).

## Revendications

1. Agencement de toit escamotable (8) pour un cabriolet, comprenant une articulation principale (14) comprenant au moins deux bras oscillants (15, 16) et déplaçable autour d'un palier principal (11), un élément de toit principal (17), qui est connecté à l'articulation principale (14) dans des premières articulations (24', 25), au moins un élément de toit supplémentaire (20) disposé derrière l'élément de toit principal (17) dans une position de fermeture (ST) de l'agencement de capteur (8), et comprenant une tringlerie de liaison (26) pour l'élément de toit supplémentaire (20), qui est connectée à l'articulation principale (14) dans des deuxièmes articulations (27, 28), **caractérisé en ce que** la tringlerie de liaison (26) et l'élément de toit supplémentaire (20) forment conjointement avec l'articulation principale (14) un mécanisme articulé (33) à au moins cinq membres, dans lequel les deuxièmes articulations (27, 28) de l'élément de toit supplémentaire (20) se situent entre le palier principal (11) et les premières articulations (24', 25).

2. Agencement de toit selon la revendication 1, **caractérisé en ce que** l'articulation principale (14) comprend un bras oscillant avant et un bras oscillant arrière (15, 16), **en ce qu'**entre le bras oscillant avant (15) et l'élément de toit supplémentaire (20) est disposé un organe de transmission (bras oscillant d'accouplement (29)) du mécanisme articulé (33) et **en ce que** l'élément de toit supplémentaire (20) est relié au bras oscillant arrière (16) directement dans une articulation (28).

3. Agencement de toit selon la revendication 1 ou 2, **caractérisé en ce que** dans la position de fermeture (ST) de l'agencement de toit (8), l'élément de toit principal (17) et l'élément de toit supplémentaire (20) s'appliquent l'un contre l'autre.

4. Agencement de toit selon l'une quelconque des revendications précédentes, **caractérisé par** un élément de toit avant (18) disposé avant l'élément de toit principal (17) - dans la position de fermeture (ST) de l'agencement de toit (8).

5. Agencement de toit selon la revendication 5, **caractérisé en ce que** l'élément de toit avant (18) est intégré par commande dans l'articulation principale (14).

6. Agencement de toit selon l'une quelconque des revendications 4 ou 5, **caractérisé en ce que** dans la position de fermeture (ST) de l'agencement de toit (8), l'élément de toit avant (18), l'élément de toit principal (17) et l'élément de toit supplémentaire (20) sont disposés en rang les uns par rapport aux autres.

7. Agencement de toit selon l'une quelconque des revendications précédentes, **caractérisé par** une toile de capote (23) qui est supportée par les éléments de toit (17, 18, 20).

8. Agencement de toit selon l'une quelconque des revendications précédentes, **caractérisé par** une vitre arrière (22) qui est intégrée dans la toile de capote (23) au moins dans la position de fermeture (ST) de l'agencement de toit (8).
